# EUROPEAN PATENT APPLICATION

(11) **EP 1 303 029 A2**
(43) Date of publication of application: **16.04.2003**
(21) Application number: 02027153.2
(22) Date of filing: 19.03.1996
(51) Int. Cl.: H02K 16/02

(54) **An electrical machine comprising at least two rotors**

(62) Divisional of application: 96301880.9
(71) Applicant: Tai-Her, Yang, Taipei (TW)
(72) Inventor: Tai-Her, Yang, Taipei (TW)
(74) Representative: Wright, Howard Hugh Burnby

(57) **Abstract**

The electromagnetic machine comprises at least two rotors 101, 102, and means (103, 104) for establishing a magnetic field, including at least one magnet having first and second poles. Each pole of the or each magnet is disposed to generate a magnetic field across a different rotor. Preferably, each pole of each magnet is disposed to generate a magnetic field across a different run of the rotors so as to form a magnetic circuit.

## Description

The present invention relates to an electromagnetic machine of the type including a rotor which is rotatable in a magnetic field, and a magnet for generating the magnetic field. The electromagnetic machine may be a motor or a generator. Conventional motors and generators of this type are heavy and have a restricted efficiency. Where more than one machine run together, it is difficult to balance their performance if this is required.

According to the present invention, an electromagnetic machine comprises at least two rotors, means for establishing a magnetic field including at least one magnet having first and second poles, each pole of the or each magnet being disposed to generate a magnetic field across a different rotor.

This invention permits such machines to be lighter in weight, and more efficient in creating a magnetic field. The rotors may also be externally exposed, thereby dissipating heat more effectively, and enabling simpler connection of the rotor to an external transmission. The invention also permits the different rotors to be more closely balanced by generating a more similar magnetic field across each rotor. The magnetic flux density characteristics of the magnetic field will be much more similar. The rotors will then run closer together, reducing the hysteresis of the individual rotors. The machine is therefore more stable. The inertia of the motor can also be reduced. Different rotor shapes may be used, such as cylindrical, disk shaped, cone shaped, straight or cup-shaped rotors. More flexibility is possible with regard to the utilisation of space within the machine.

Preferably, the means for establishing a magnetic field includes a plurality of magnets, each having first and second poles, each pole of each magnet being disposed to generate a magnetic field across a different one of the rotors, and to form a magnetic circuit. The use of a magnetic circuit is particularly advantageous and includes the advantages described above. The machine is lighter, has a more even flux density across different rotors and the magnetic circuits can be connected in series to improve the efficiency of the machine. With the formation of magnetic circuits, those circuits may extend axially to connect magnets in series or parallel.

The electromagnetic machine may be a generator or motor, or a mixture of the two, and may be AC or DC generators or motors, or a mixture of the two.

A single conventional motor or generator is usually heavier than two separate motors or generators which together have the same power output in combination. The conventional single motor or generator also has less effective heat dissipation due to the rotors and magnets being enclosed. When motors or generators are connected in parallel, they will have different characteristics which, in part, is due to the differences in the magnetic fields applied across the rotors. In some instances, this can be useful, since one motor can be very good at starting, whereas the other motor can be better during full speed operation. Differences in magnetic field may cause hysteresis.

Embodiments of the present invention are described below, by way of example, and with reference to the accompanying drawings, in which:
Figure 1 shows the first embodiment of the invention in which the rotors of two electromagnetic machines are mounted on shafts which are rotatable about a common axis;
Figure 2 is a cross-section taken on the line A-A' of Figure 1;
Figure 3 shows a second embodiment of the present invention having four rotors which are rotatable about a common axis, and the magnets are permanent magnets;
Figure 4 is a cross-section taken on the line B-B' of Figure 3;
Figure 5 shows a third embodiment of the present invention including four rotors and two separate magnetic circuits lying in the same plane;
Figure 6 is a cross-section taken on the line C-C' of Figure 5;
Figure 7 is a cross-section taken on the line D-D' of Figure 5;
Figure 8 shows a fourth embodiment of the present invention including four rotors, in which two separate magnetic circuits are shown each lying perpendicularly to the other.
Figure 9 is a cross-section taken on the line E-E' of Figure 8;
Figure 10 is a cross-section taken on the line of F-F' of Figure 8;.
Figure 11 shows a fifth embodiment of the present invention including four rotors and a single magnetic circuit.
Figure 12 is a cross-section taken on the line G-G' of Figure 11;
Figure 13 is a cross-section taken on the line H-H' of Figure 11;
Figure 14 shows a sixth embodiment of the present invention in which two rotors are linked together in a two-stage rotor structure.
Figure 15 is a cross-section taken on the line I-I' of Figure 14;
Figure 16 is a cross-section taken on the line J-J' of Figure 14;
Figure 17 shows a seventh embodiment of the present invention in which the rotors rotate about different parallel axes;
Figure 18 is a cross-section taken on the line K-K' of Figure 17;
Figure 19 is a cross-section taken on the line L-L' of Figure 17;
Figure 20 shows an eighth embodiment of the present invention in which the rotors are disposed perpendicularly to each other;
Figure 21 is a cross-section taken on the line M-M' of Figure 20;
Figure 22 shows a ninth embodiment of the present invention in which multiple independently driven rotors are used.
Figure 23 is a cross-section taken on the line N-N' of Figure 22;
Figure 24 shows a tenth embodiment of the invention in which the magnetic circuit connects the rotors in series;
Figure 25 is a cross-section taken on the line 0-0' of Figure 24;
Figure 26 shows an eleventh embodiment of the invention, in which the magnetic circuit forms a ring joining independently driven rotors;
Figure 27 is a cross-section taken on the line P-P' of Figure 26;
Figure 28 shows a twelfth embodiment of the invention in which the rotors lie next to each other with their axes parallel to each other across the magnetic circuit;
Figure 29 is an end view of the machine shown in Figure 28;
Figure 30 is a cross-section taken on the line Q-Q' of Figure 28;
Figure 31 is a cross-section taken on the line R-R' of Figure 28;
Figure 32 shows a thirteenth embodiment of the invention in which a closed magnetic circuit is shown;
Figure 33 is a cross-section taken on the line S-S' of Figure 32;
Figure 34 shows a fourteenth embodiment of the invention in which the magnetic circuit forms a ring, and the magnets are electromagnets having field windings;
Figure 35 is a cross-section taken on the line T-T' of Figure 34;
Figure 36 shows a fifteenth embodiment of the invention in which the magnetic circuit is connected in series between a plurality of rotors;
Figure 37 is a cross-section taken on the line U-U' of Figure 36;
Figure 38 shows a sixteenth embodiment of the present invention in which transmission components are used to transfer drive to a ring-gear;
Figure 39 is a cross-section taken on the line V-V' of Figure 38;
Figure 40 shows a seventeenth embodiment of the invention in which multiple rotors are connected to drive an external ring gear;
Figure 41 is a cross-section taken on the line W-W' of Figure 40;
Figure 42 shows an eighteenth embodiment of the invention in which the rotors are arranged linearly;
Figure 43 is a cross-section taken on the line X-X' of Figure 42;
Figure 44 is a side view of the machine of Figure 42;
Figure 45 shows a nineteenth embodiment of the invention in which the rotors are disposed linearly, and the magnets are electromagnets;
Figure 46 is a cross-section taken on the line Y-Y' of Figure 45;
Figure 47 is a side view of the machine of Figure 45;
Figure 48 shop a twentieth embodiment of the invention in which the rotors of the electromagnetic machine are arranged linearly, and carry drive wheels;
Figure 49 is a cross-section taken on the line Z-Z' of Figure 48;
Figure 50 is a side view of the machine of Figure 48;
Figure 51 shows a twenty-first embodiment of the invention in which the rotors carry wheels, and part of the magnetic circuit forms a guide rail;
Figure 52 is a cross-section taken on the line AA-AA' of Figure 51;
Figure 53 is a side view of the machine of Figure 51;
Figure 54 shows a schematic example of the invention illustrating the structure of the magnetic circuit of the embodiments shown in Figures 1 to 16;
Figure 55 shows a side view of the diagram of Figure 54;
Figure 56 is a schematic diagram of the invention illustrating the field magnetic circuit of the embodiments of Figures 28 to 33;
Figure 57 shows a side view of Figure 56;
Figure 58 is a schematic diagram of the field magnetic circuit of the embodiments shown in Figures 19 to 27;
Figure 59 is a side view of Figure 58;
Figure 60 is a schematic diagram of the field magnetic circuit of the embodiments shown in Figures 34 to 53;
Figure 61 is a side view of Figure 60;
Figure 62 shows an example of the multi-pole iron cores in the series combined structure of the invention;
Figure 63 is a cross-section taken on the line BB-BB' of Figure 62;
Figure 64 shows an example of the multi-pole iron cores in the series combined structure of the invention; and
Figure 65 is a cross-section taken on the line CC-CC' of Figure 64;

In the embodiments of the present invention to be described below, the magnets are connected into a magnetic circuit so that two or more rotors are disposed within the magnetic circuit.

In each embodiment, the machine includes two or more rotors, each of which might form a motor or a generator. The machine will normally include a casing and bearings made from materials which are poor magnetic materials. In each of the embodiments described below, the electromagnetic machine is referred to as a motor, although it may equally well be a generator. In some circumstances, generators and motors may operate within the same machine. In each embodiment, a rotor rotates within a magnetic field generated between magnetic poles of magnets. At least one magnet includes a first pole which applies a magnetic field to a first rotor, and a second pole which applies a magnetic field to a second rotor. The magnets are therefore connected together in a circuit. Each magnet may be a permanent magnet or an electromagnet having field windings for generating a magnetic field from their poles. The magnet may also be a combination of permanent magnets and electromagnets. The rotors may have the same characteristics or different characteristics. For example, where the machine is a motor, one rotor may be better during start-up, whereas the other rotor may be better during steady running. Alternatively, the rotors may be the same.

Where an electromagnet is used, and the rotor includes a field winding, the rotor field winding and the magnet field winding can be electrically combined, for example in series, in parallel or in a combination of the two.

The different rotors can be operated independently of each other or together. They may be mounted on the same shaft or on separate shafts.

Various arrangements are possible, for example different rotors may drive shafts independently of each other, or together. Alternatively, a combination of common shafts for some rotors and independent shafts for others is possible. The electromagnetic machine may operate using AC or DC, and may include apparatus for commutation, such as brushes, or alternatively slip rings.

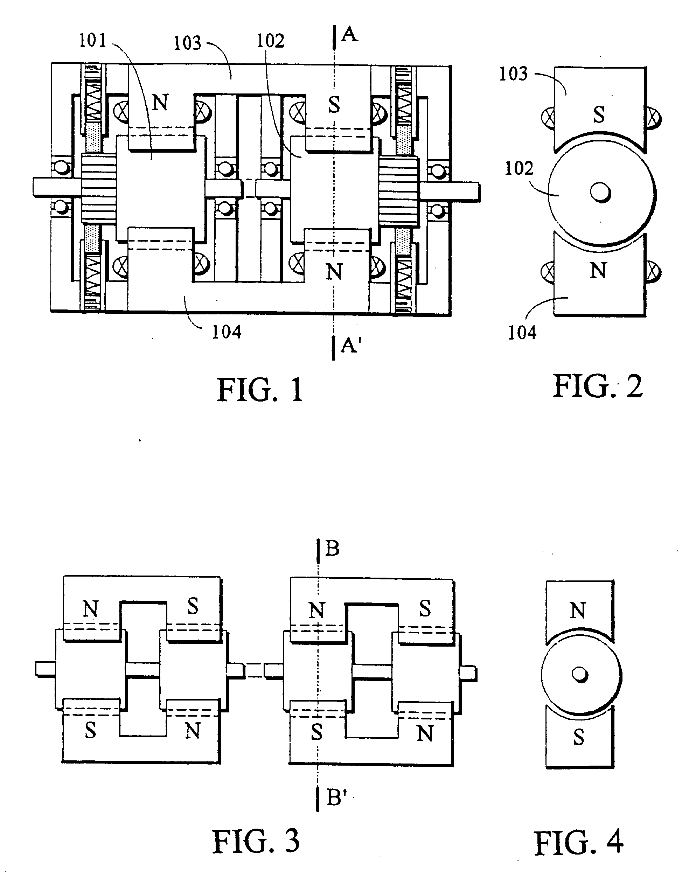

Referring now to Figures 1 and 2, a first rotor 101 and a second rotor 102 are mounted to rotate about a common axis. Each rotor 101,102 is mounted on a respective shaft. Alternatively, the rotors are mounted on a common shaft. Each rotor 101,102 rotates between two magnetic poles of opposite polarities, the poles being part of a pair of magnets 103,104. The magnets 103,104 are disposed such that each magnet places a pole adjacent each rotor 101,102. The north pole of the magnet 103 is disposed on one side of the rotor 101, and the south pole of the magnet 104 is disposed on the opposite side of the rotor 101. The south pole of the magnet 103 is disposed on the opposite side of the rotor 102 to the north pole of the magnet 104. The magnets 103,104, therefore, form a ring in which two rotors 101 and 102 are disposed. This forms a magnetic field circuit. In this embodiment, each magnet 103 and 104 is an electromagnet having magnetic field windings disposed around each pole. The rotor 101 and 102 include field windings for interaction with the magnetic field generated by the magnets 103 and 104. Current is supplied to each rotor winding separately via brushes and commutating segments carried by the rotor. The brushes, brush holders and brush springs are shown in Figure 1.

As shown in Figure 1, the magnets 103 and 104 lie in the same plane. Where the motor is DC operated, the magnets 103 and 104 are made from a good conductive magnetic material. In the case of an AC motor, the magnets are made of a conductive magnetic material with low eddy current loss. In either case, in this embodiment, the two magnets 103 and 104 are disposed 180° apart with respect to the rotors 101 and 102.

Referring now to Figures 3 and 4, a second embodiment of the invention is shown, including four rotors. Two of the motors are mounted on a common shaft, and the other two motors are also mounted on a common shaft separate from that of the first. The two separate shafts are rotatable about a common axis, and may be connected, or may rotate independently of each other. Two separate magnetic circuits are shown.

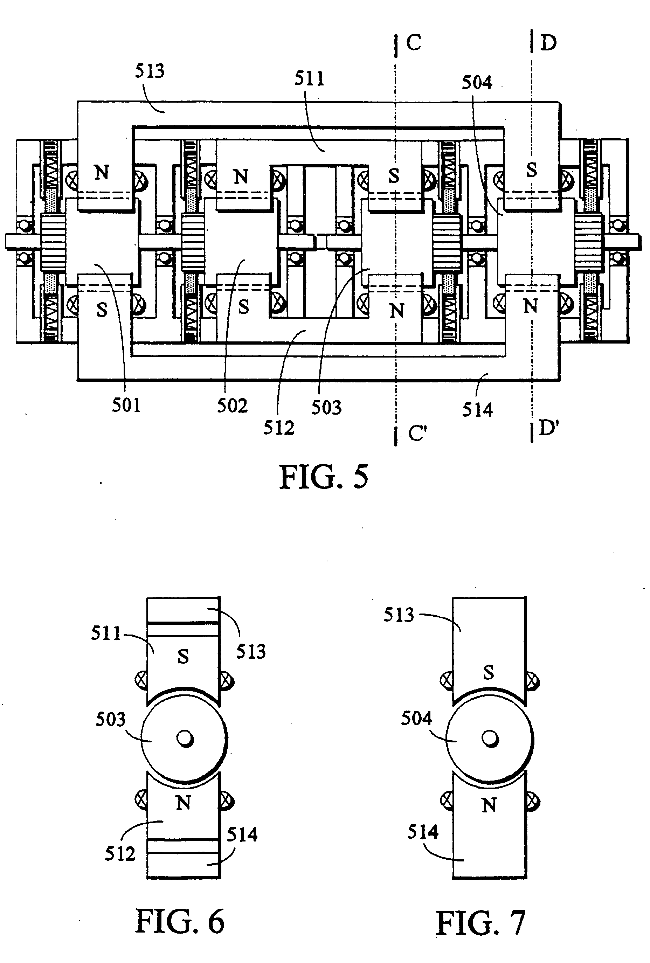

Referring now to Figures 5, 6 and 7, again four rotors 501, 502, 503 and 504 are shown. The first rotor 501 and the second rotor 502 are mounted on a common shaft, and the third rotor 503 and the fourth rotor 504 are mounted on a common shaft separate to the shaft on which the first and second rotors 501 and 502 are mounted. Both shafts rotate about a common axis. A first magnet 54 is mounted such that its north pole is disposed against the second rotor 502, and its south pole is mounted against the third rotor 503. A second magnet 512 is disposed such that its south pole is disposed against the second rotor 502, and its north pole is disposed against the third rotor 503. This, therefore, forms a magnetic circuit. A third magnet 513 is disposed with its north pole against the first rotor 501, and with its south pole disposed against the fourth rotor 504. A fourth magnet 514 is mounted such that its south pole is disposed against the first rotor 501, and its north pole is disposed against the fourth rotor 504. This forms a second independent magnetic circuit. The magnets 511,512,513 and 514 all lie in the same plane, with the poles of the first and third magnets being disposed 180° away from the poles of the second and forth magnets.

Each rotor includes windings, and current is supplied to these windings through commutators.

The shaft of the first and second rotors and the shaft of the third and fourth rotors may be joined together to form a single shaft.

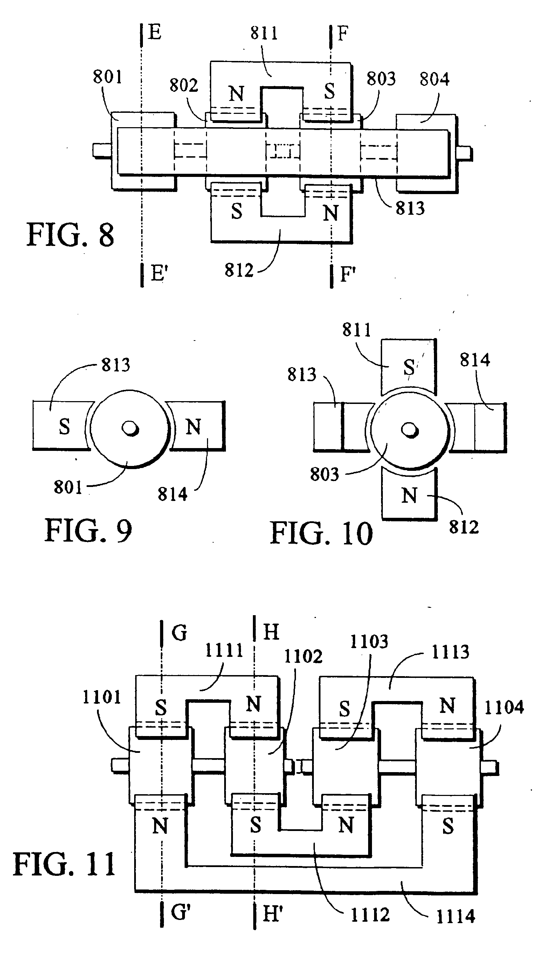

Referring now to Figures 8, 9 and 10, the arrangement is similar to that disclosed in Figures 5, 6 and 7, except that the two magnetic circuits are disposed perpendicular to each other. The arrangement includes first, second, third and fourth rotors 801,802,803 and 804. A first magnetic circuit is formed around the second rotor 802 and the third rotor 803. A first magnet 811 is disposed with its north pole against the second rotor 802, and with its south pole against the third rotor 803. A second magnet 812 is mounted with its south pole against the second rotor 802, and with its north pole against the third rotor 803. A second magnetic circuit is formed around the first rotor 801 and the fourth rotor 804. A third magnet 813 is disposed with one of its poles against the first rotor 801, and with its second pole against the fourth rotor 804. The fourth magnet 814 is disposed with one pole (of opposite plurality to that of the third magnet 813) against the first rotor 801, and with its other pole against the fourth rotor 804. The second magnetic circuit lies at 90° to the first magnetic circuit. In section, as shown in Figure 10, the magnets 811, 812, 813 and 814 form a cruciform shape around the rotor 803.

Referring now to Figures 11, 12 and 13, four rotors 1101, 1102, 1103 and 1104, which rotate on a common shaft or on separate shafts about a single axis, are connected into a magnetic circuit. A single magnetic circuit is in place, the circuit including a first magnet 1111 disposed between the first and second rotors 1101 and 1102, a second magnet 1112 disposed between the second and third rotors 1102 and 1103, a third magnet 1113 disposed between the third and fourth rotors 1112 and 1114, and a fourth magnet 1114 disposed between the fourth and the first rotors 1114 and 1111. All of the magnets 1111,1112,1113 and 1114 lie in the same plane, and the poles of the magnets apply magnetic fields across the rotors 1101, 1102, 1103 and 1104 in a single plane. The magnetic field across each rotor is in the opposite direction to the next adjacent rotor.

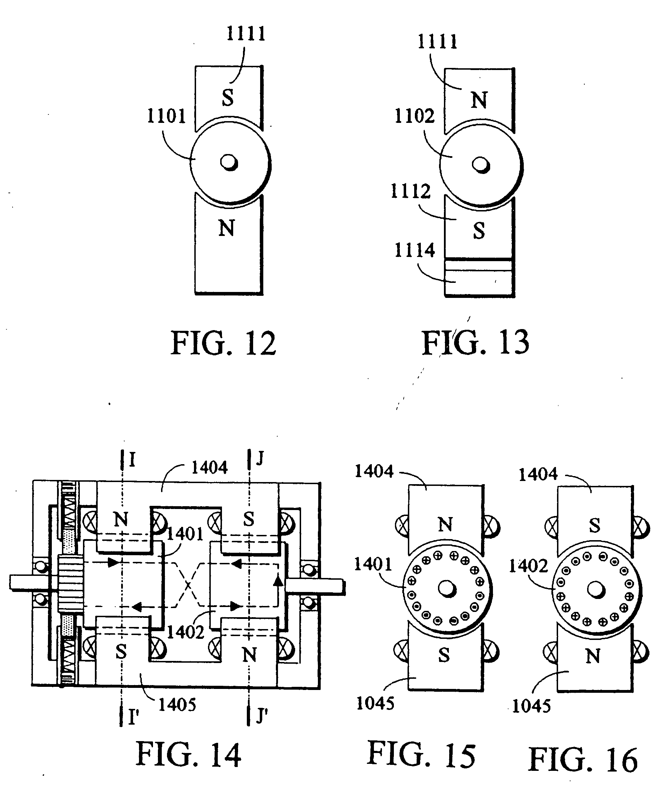

Referring now to Figures 14, 15 and 16, a first rotor 1401 and a second rotor 1402 are mounted for rotation on the same shaft. A first magnet 1404 is disposed with its north pole adjacent to the first rotor 1401, and with its south pole adjacent to the second rotor 1402. A second magnet 1405 is disposed with its south pole adjacent to the first rotor 1401 and with its north pole adjacent to the second rotor 1402. Each of the rotors 1401, 1402 includes field windings which are connected together. One of the rotors carries commutating segments, whereby electrical current is fed to that rotor via commutator brushes. As will be understood from the drawings, the directions of current flow through the windings of the first and second rotors 1401 and 1402 are 180° out of phase with each other. The reason for this is that the direction of the magnetic field across each of the rotors 1401 and 1402 is in opposite directions.

The above described motor is a DC motor, but if an AC electric motor is used, then the commutating apparatus is replaced by a conducting ring.

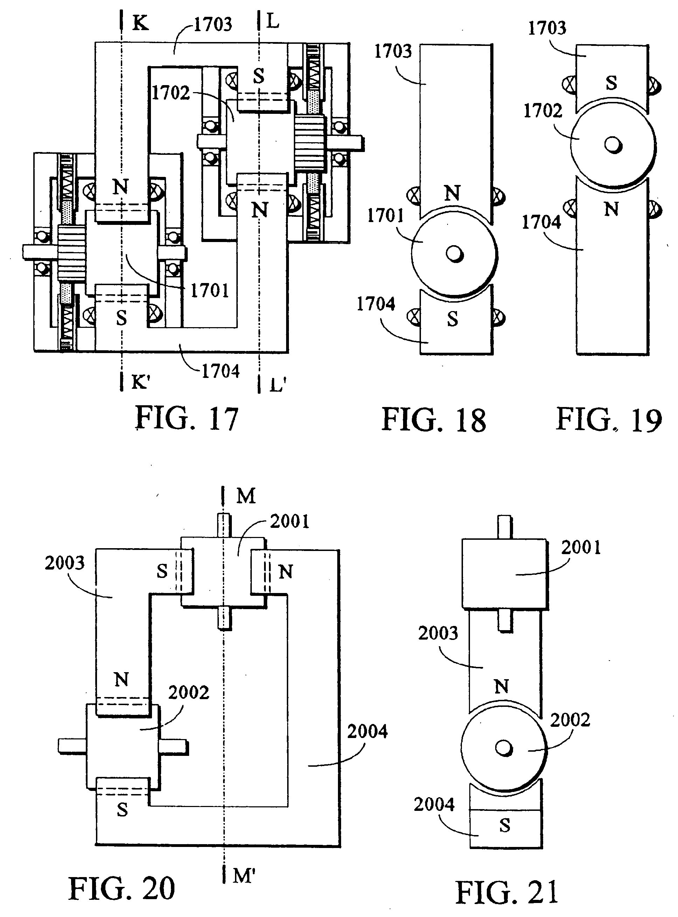

Referring now to Figures 17, 18 and 19, a first rotor 1701 and a second rotor 1702 are mounted on separate shafts which are parallel but offset from each other. A first magnet 1703 is disposed with its north pole adjacent to the first rotor 1701, and with its south pole adjacent to the second rotor 1702. This results in the north pole of the magnet 1703 being elongate relative to the south pole. A second magnet 1704 is disposed with its south pole adjacent to the first rotor 1701, and with its north pole adjacent to the second rotor 1702. Again, the north pole is elongate relative to the south pole to take account of the offset axis of the two rotors 1701,1702. The magnets 1703 and 1704 form a magnetic circuit. The rotors 1701 and 1702 are supplied with electrical current via separate commutating apparatus. Each rotor 1701,1702 is operable independently of the other.

Referring now to Figures 20 and 21, a first rotor 2001 and a second rotor 2002 are mounted with their axes of rotation perpendicular to each other. A first magnet 2003 is disposed with its south pole adjacent to the first rotor 2001 and with its north pole adjacent to the second rotor 2002. A second magnet 2004 is disposed with its north pole adjacent to the first rotor 2001, and with its south pole adjacent to the second rotor 2002. The second magnet 2004 is much longer than the first magnet 2003 in order to link the two rotors 2001 and 2002 into a magnetic circuit. The magnets 2003 and 2004 lie in the same plane, and the axes of the rotors 2001 and 2002 also lie in the same plane. The rotors 2001 and 2002 may be operated to drive independently of each other, or together.

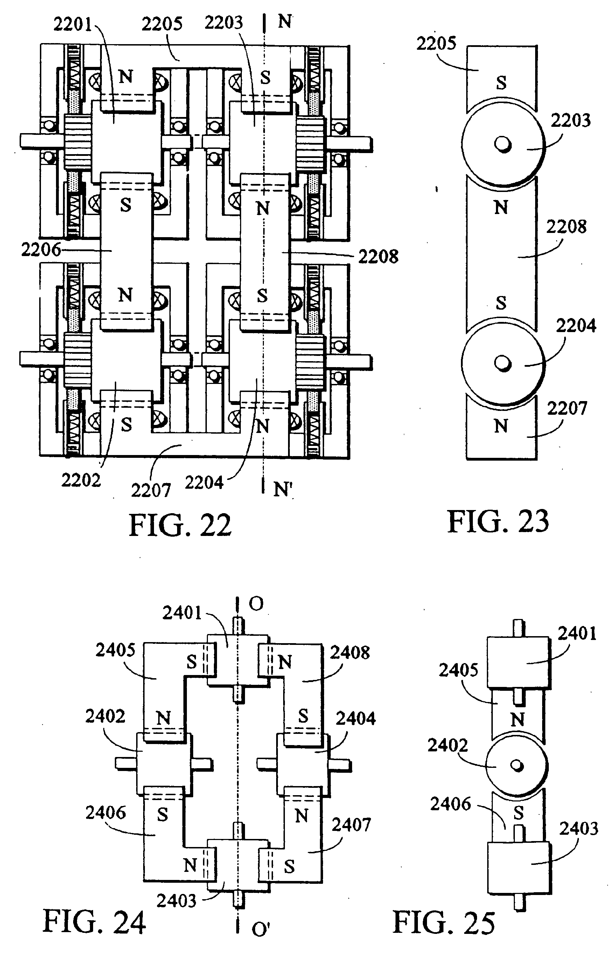

Referring now to Figures 22 and 23, a first rotor 2201 and a third rotor 2203 are rotatable about a common axis. A second rotor 2202 and a fourth rotor 2204 are rotatable about a common axis which is parallel to the axis of rotation of the first and third rotors 2201 and 2203, but is displaced from that axis. The first and third rotors 2201 and 2203 are disposed adjacent to the second and fourth rotors 2202 and 2204. A first magnet 2205 is mounted with its north pole adjacent to the first rotor 2201, and with its south pole adjacent to the third rotor 2203. A second magnet 2206 is mounted with its south pole adjacent to the first rotor 2201, and with its north pole adjacent to the second rotor 2202. A third magnet 2207 is mounted with its south pole adjacent to the second rotor 2202, and with its north pole adjacent to the fourth rotor 2204. A fourth magnet is mounted with its south pole disposed adjacent to the fourth rotor 2204, and with its north pole adjacent to the third rotor 2203. The first and third rotors 2201 and 2203 may be mounted on the same or separate shafts so as to be rotatable together or separately. Likewise, the second rotor 2202 and the fourth rotor 2204 may be mounted on the same or different shafts, and may be rotatable together or separately. The magnets 2205,2206,2207 and 2208 lie in the same plane, and the axes of rotation of the rotors 2201,2202,2203 and 2204 lies in the same plane.

Referring now to Figures 24 and 25, four rotors 2401, 2402, 2403 and 2404 are disposed perpendicularly to each other, with the second and fourth rotors 2402 and 2404 rotatable about a common axis, and with the first and third rotors 2401 and 2403 also rotatable about a separate common axis. The two axes of rotation are perpendicular to each other. Four magnets 2405, 2406 and 2407, 2408 connect the rotors 2401,2402,2403 and 2404 into a magnetic circuit in a similar manner to that described in the earlier embodiments. The magnets 2405,2406,2407 and 2408 form a rectangular structure joining the rotors 2401,2402,2403 and 2404.

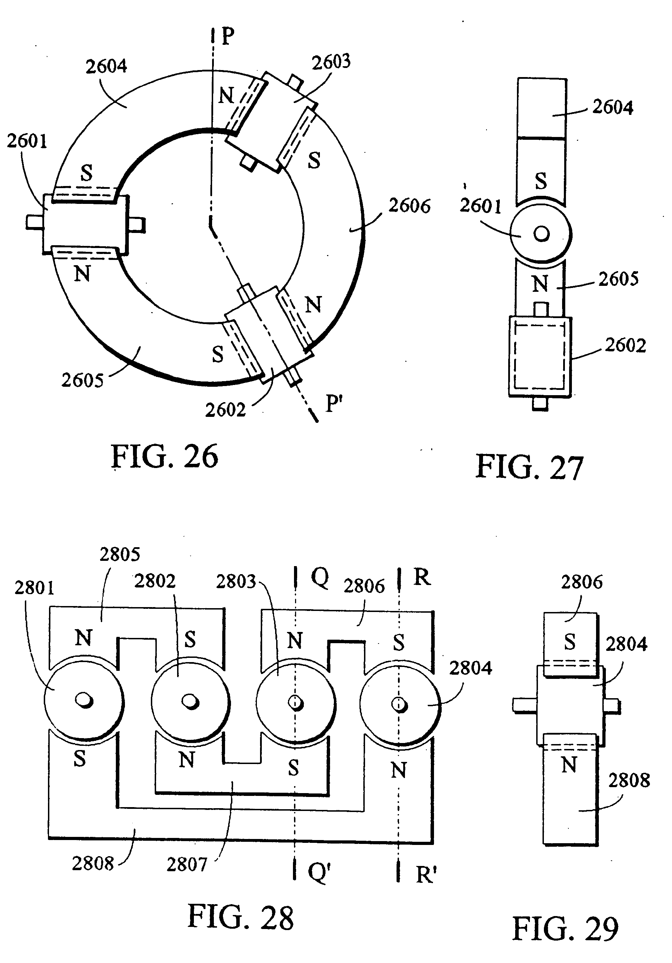

Referring now to Figures 26 and 27, three rotors 2601, 2602, 2603 are joined together in a ring of magnets 2604, 2605 and 2606. The three rotors 2601,2602 and 2603 lie in the same plane as the magnets 2604,2605 and 2606, but their axes of rotation are separated by equal angles of 120°.

Referring now to Figures 28, 29, 30 and 31, four rotors 2801, 2802, 2803, 2804 are disposed adjacent to each other with their axes of rotation in parallel. Magnets 2805, 2806, 2807 and 2808 are disposed between the rotors 2801,2802,2803 and 2804 in a similar arrangement to that described in Figure 11. The magnets 2805,2806,2807 and 2808 lie in a single plane, and the axes of rotation of the rotors 2801,2802,2803 and 2804 lie perpendicular to the plane of the magnets. The magnets 2805,2806,2807 and 2808 form a magnetic circuit.

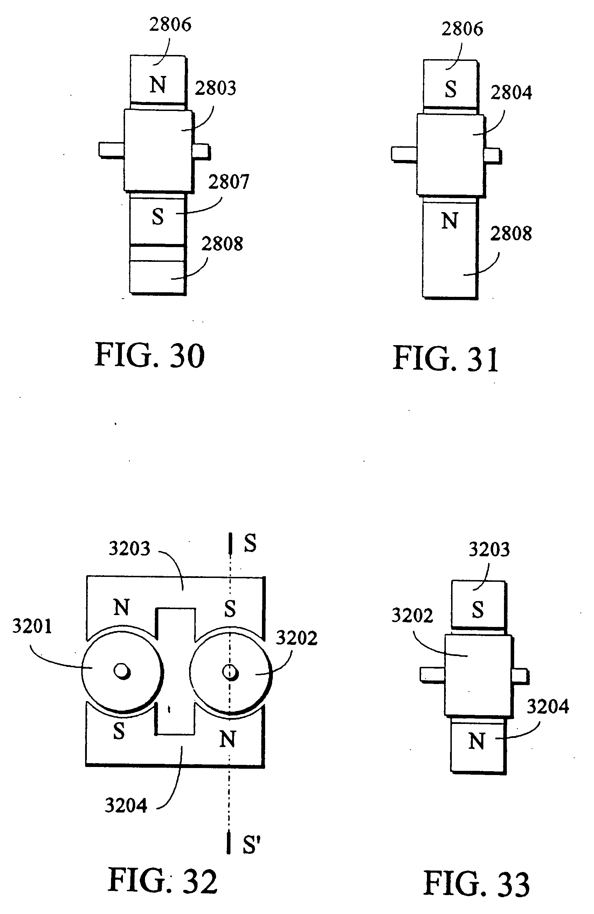

Referring now to Figures 32 and 33, two rotors 3201 and 3202 are disposed parallel to each other, and first and second magnets 3203 and 3204 are disposed between the rotors in order to form a magnetic circuit. The magnets 3203 and 3204 lie in a plane, and the axes of rotation of the rotors 3201 and 3202 are perpendicular to the plane of the magnets.

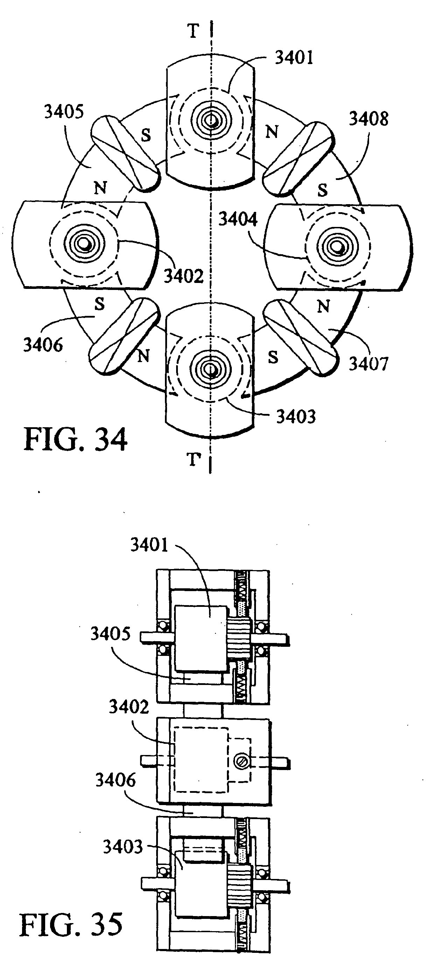

Referring now to Figures 34 and 35, four rotors 3401, 3402, 3403 and 3404 are disposed within a ring of four magnets 3405, 3406, 3407 and 3408. Each magnet 3405, 3406, 3407 and 3408 is an electromagnet with a central field winding. The magnets 3405, 3406, 3407 and 3408 lie in a plane, and the axes of rotation of the rotors 3401, 3402, 3403 and 3404 are parallel to each other, and perpendicular to the plane of the magnets. The magnets 3405, 3406, 3407 and 3408 form a magnetic circuit.

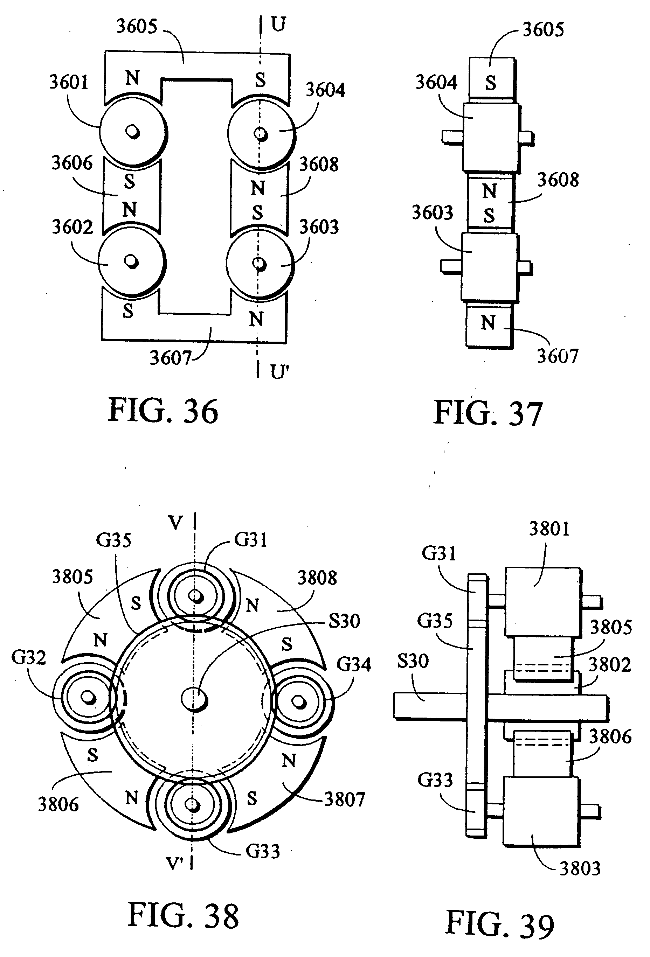

Referring now to Figures 36 and 37, four rotors 3601, 3602, 3603 and 3604 are disposed next to each other with parallel axes of rotation. Four magnets 3605, 3606, 3607 and 3608 are disposed between adjacent rotors 3601, 3602, 3603 and 3604, and form a closed magnetic circuit in a plane. The axes of rotation of the rotors 3601, 3602, 3603 and 3604 are parallel to each other, but are perpendicular to the plane of the magnets 3605, 3606, 3607 and 3608.

Referring now to Figures 38 and 39, four rotors 3801, 3802, 3803 and 3804 are disposed between four magnets 3805, 3806, 3807 and 3808 which form a circular or ringshaped magnetic circuit. Each rotor 3801, 3802, 3803 and 3804 includes a shaft on which a pinion G31, G32, G33 and G34 is carried. A ring gear, or centre gear G35 is disposed centrally of, and engages with, the pinions G31, G32, G33 and G34, the centre gear being rotatable about a shaft S30. In operation, the rotors 3801, 3802, 3803 and 3804 together drive the centre gear G35 about the shaft S30. Drive is, therefore, transmitted from the rotors 3801, 3802, 3803 and 3804. In an alternative embodiment, the gears are replaced by friction wheels.

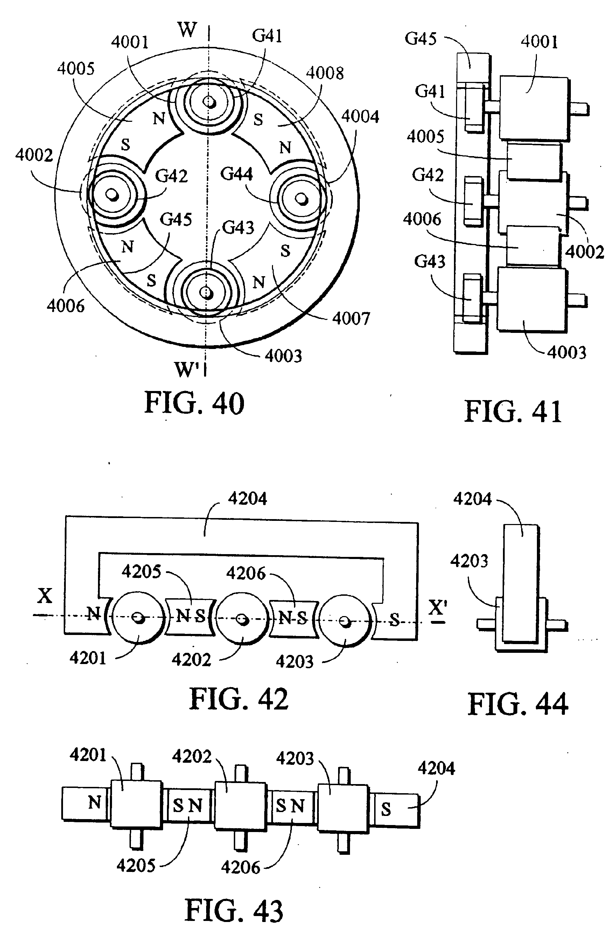

Referring now to Figures 40 and 41, the rotors 4001, 4002, 4003 and 4004 and the magnets 4005, 4006, 4007 and 4008 operate in the same way as the equivalent parts in the embodiment shown in Figures 38 and 39. However, the centre gear is replaced by an external ring gear G45. Again, the gears may be replaced by friction wheels. Furthermore, the number of rotors included in the device may be changed to increase or decrease the number of pinions driving the ring gear G45.

Referring now to Figures 42, 43 and 44, three rotors 4201, 4202 and 4203 are disposed in line with their axes of rotation parallel to each other, but disposed laterally from each other. The first and second rotors 4201 and 4202 are separated by a short magnet 4205, and the second and third rotors 4202 and 4203 are separated by a short magnet 4206. The first and third rotors 4201 and 4203 are separated by a long C-shaped magnet 4204 which completes magnetic circuit. The axes of rotation of the rotors 4201, 4202 and 4203 are perpendicular to the plane of the magnets 4204, 4205 and 4206.

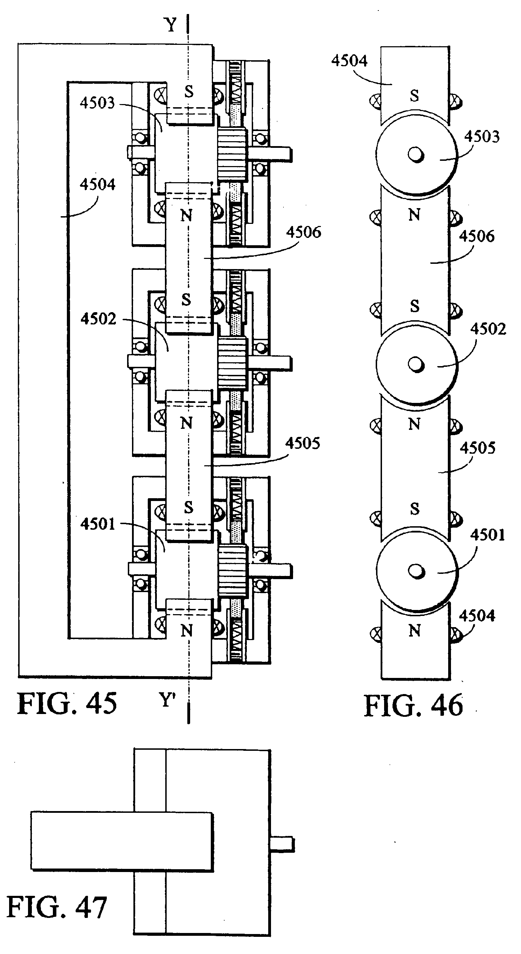

Referring now to Figures 45, 46 and 47, a modified example of the embodiment shown in Figures 42, 43 and 44 is shown. Each rotor 4501, 4502 and 4503 includes commutating segments by which electric current is supplied to the rotor windings from brushes. Each magnet 4504, 4505 and 4506 includes two field windings. The axes of rotation of the rotors 4501, 4502 and 4503 lie in the same plane as the magnets (4504,4505 and 4506).

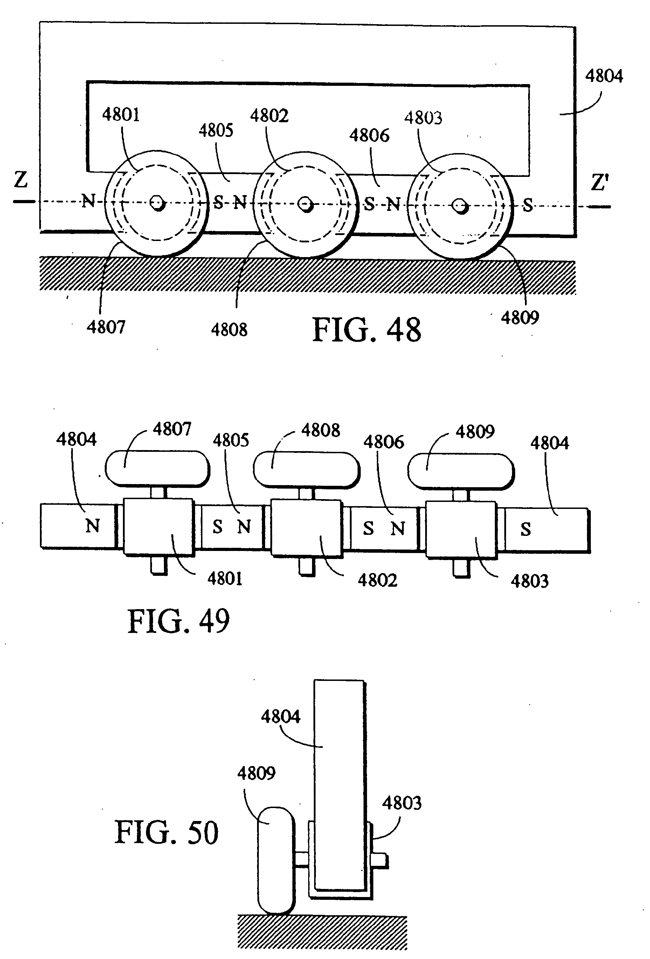

Referring now to Figures 48, 49 and 50, the embodiments shown in Figures 42 to 47 are applied in a practical example whereby in-line rotors 4801, 4802 and 4803 each carries a ground engaging wheel 4807, 4808 and 4809. A magnetic circuit is maintained by magnets 4804 (which is large and C-shaped), 4805 and 4806 (which are short). Thus, this arrangement may be used to drive a vehicle.

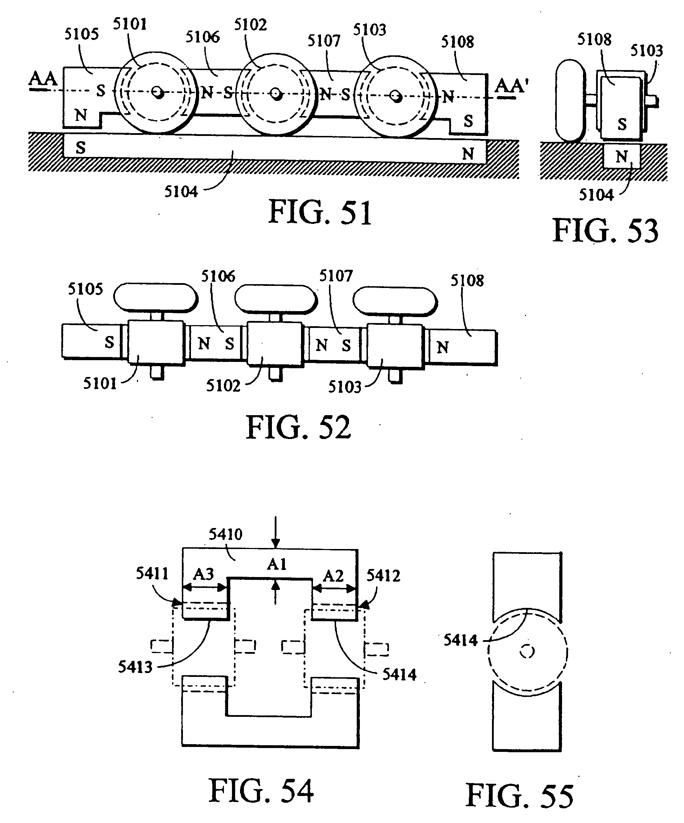

Referring now to Figures 51, 52 and 53, a wheeled device is shown which is based on the embodiment of Figures 48, 49 and 50. However, the C-shaped magnet 4801 of Figure 48 is replaced by two magnets 5105 and 5108 which are carried by the wheeled part of the machine, and an external magnet 5104 which may be in the form of a rail. Two magnets 5106 and 5107 are disposed respectively between the rotors 5101 and 5102 and between the rotors 5102 and 5103. The magnet 5104 includes one pole which is associated with the end magnet 5105, and a second pole which is associated with the magnet 5108. The external magnet 5104, therefore, closes the magnetic circuit. In certain embodiments, the external magnet 5104 is a feromagnetic material, in which magnetism can be induced, but which is not itself magnetic. In this way, the magnet circuit is still closed by the external rail or magnet 5104.

Referring now to Figures 54 and 55, a schematic diagram of a common magnetic circuit machine having more than one rotor is shown. This is a schematic diagram showing the type of machine shown in Figures 1 to 16, having two magnets. The magnets are generally U-shaped, each having poles 5411 and 5412 separated by a circuit connecting section 5410. Where the magnets are electromagnets, windings may be located at position A1 or at A2 and A3 at the poles. The axes of the rotors which (which are shown in chain dotted lines) lie in the plane of the magnets. The magnetic poles 5413 and 5414 face the rotors, and have a part circular shape in order to permit the rotors to rotate as closely as possible to the poles.

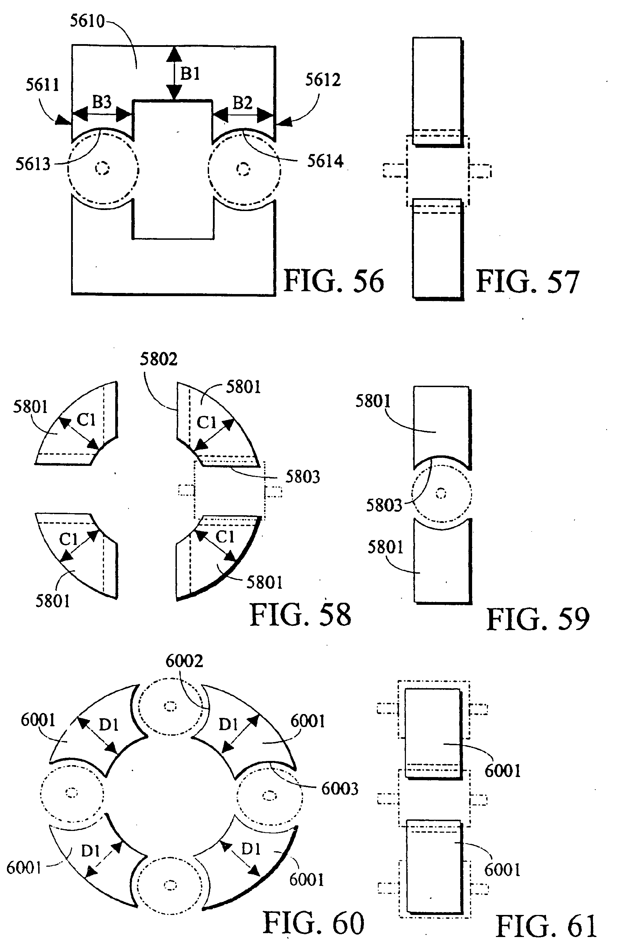

Referring now to Figures 56 and 57, a schematic diagram of a multiple rotor electric machine illustrates the structure of the embodiments shown in Figures 28 to 33. This machine has two magnets, each of which is generally U-shaped, and has poles 5611 and 5612 separated by a central region 5610 for making a magnetic circuit. Where the magnets electromagnets, windings may be located at the position B1. The axes of rotation of the rotors (which are shown in chain dotted liens) are perpendicular to the plane of the magnets. Again, the poles of the magnets are curved to accommodate the rotors. It is possible to locate field windings at positions B2 and B3.

Figures 58 and 59 are schematic diagrams of the multiple rotor electric machine as shown in the embodiments of Figures 19 to 27. This machine has four magnets which are placed together to form a closed circular (or other geometric) shape, which each magnet includes two poles 5802 and 5803 separated by a central section 5801 which is typically an iron core. Each magnet may include a field winding at position C1. The axis of rotation of the rotor (shown in chain dotted lines in Figure 5a) lies in the plane of the magnets. The poles 5802 and 5803 of the magnets are curved to accommodate the rotor.

Figures 60 and 61 are schematic diagrams of the multiple rotor machine of the embodiments shown in Figures 34 to 53. Again, four magnets form a closed ring which may be circular or of some other shape. Each magnet includes two poles 6002 and 6003 separated by a central portion 6001 which is typically an iron core. Field windings may be located at positions D1, and the poles of the magnet may be curved to accommodate the rotors (shown in chain dotted lines). The axes of rotation of the rotors are perpendicular to the plane of the magnets.

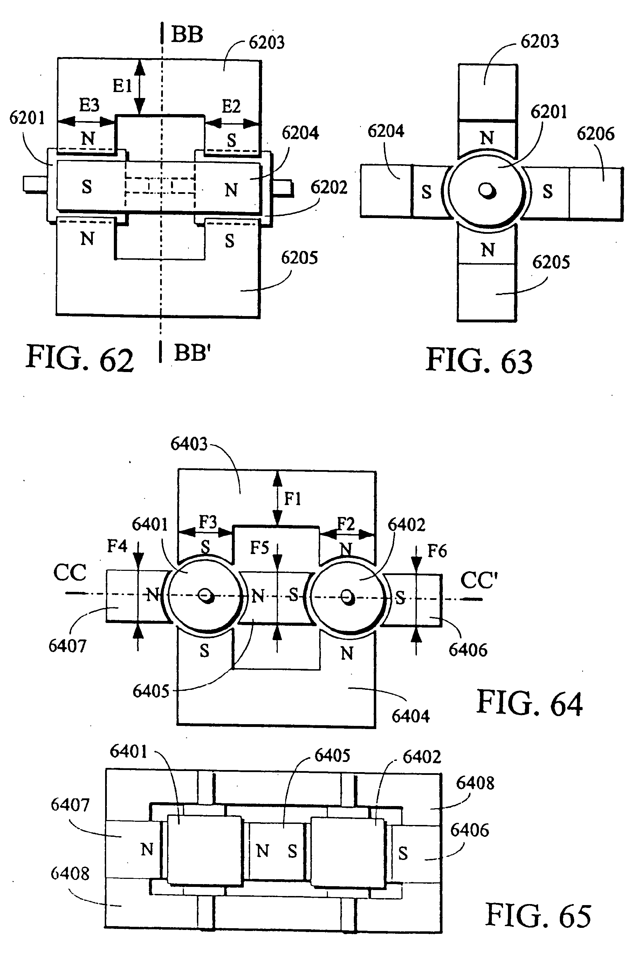

Referring now to Figures 62 and 63, an embodiment is shown in which two separate magnetic circuits are applied to two co-axial rotors 6201 and 6202. The first circuit includes a first magnet 6203 having a north pole adjacent to the first rotor 6201, and a south pole disposed adjacent to the second rotor 6202. A second magnet 6204 is disposed with its south pole adjacent to the first rotor 6201, and with its north pole disposed adjacent the second rotor 6202. The first and second magnets 6203 and 6204 are disposed at 90° to each other around the axis of rotation of the motors. A third magnet 6205 includes a north pole disposed adjacent to the first rotor 6201 and a south pole disposed adjacent to the second rotor 6202. The third rotor 6205 is disposed in the same plane as the first magnet 6203, but at 90° to the second magnet 6204 about the axis of rotation of the rotor 6201, 6202. A fourth magnet 6206 is disposed with its south pole adjacent to the first rotor 6201, and with its north pole adjacent to the second rotor 6202. The fourth magnet 6206 is disposed in the same plane as the second magnet 6204, but perpendicularly to the first and third magnets 6203 and 6205. In section, as shown in Figure 63, the magnets 6203, 6204, 6205 and 6206 form a cruciform shape. Thus, a separated form of magnetic circuit is made. Windings for the magnets may be located at positions E1, E2 and E3.

Figures 64 and 65 show a similar arrangement to that of the embodiment shown in Figures 62 and 63, but the two rotors 6401 and 6402 are next to each other with parallel axes of rotation. A first magnet 6403 is disposed with its south pole adjacent to the first rotor 6401, and with its north pole adjacent to the second rotor 6402. A second magnet 6404 is disposed with its south pole adjacent to the first rotor 6401, and with its north pole adjacent to the second rotor 6402. The first and second magnets 6403 and 6404 lay in a common plane, and the axes of rotation of the rotors 6401 and 6402 are perpendicular to the plane. A third magnet 6405 is disposed between the first and second rotors 6401 and 6402 with its north pole adjacent to the first rotor 6401 and with its south pole adjacent to the second rotor 6402. A fourth magnet includes a south pole 6406 disposed adjacent to the second rotor 6402, and a north pole 6407 disposed adjacent to the first rotor 6401. The two poles 6406 and 6407 are linked by a circular iron core of the magnet which extends around both ends of the rotors 6401 and 6402. The third and fourth magnets lie in a second plane perpendicular to that of the first and second magnets 6403 and 6404, and in the same plane as the axes of rotation of the first and second rotors 6401 and 6402. Thus, two interacting circuits are located within the machine.

Below are listed preferred features of the invention:

### PREFERRED FEATURES

1. An electromagnetic machine comprising:
   at least two rotors;
   means for establishing a magnetic field including at least one magnet having first and second poles, each pole of the or each magnet being disposed to generate a magnetic field across a different rotor.
2. A machine according to feature 1, wherein the means for establishing a magnetic field includes a plurality of magnets, each having first and second poles, each pole of each magnet being disposed to generate a magnetic field across a different one of the rotors and to form a magnetic circuit.
3. A machine according to feature 1 or feature 2, wherein the magnets are permanent magnets.
4. A machine according to feature 1 or feature 2, wherein the magnets are electromagnets.
5. A machine according to any one of the preceding features wherein the electromagnetic machine is an electric motor.
6. A machine according to any one of features 1 to 4, wherein the electromagnetic machine is an electric generator.
7. A machine according to any one of features 1 to 4, including a rotor operable as an electric generator for being driven by an external force, and a further rotor operable as an electric motor for receiving electrical energy, the different rotors being operable simultaneously or non-simultaneously.
8. A machine according to any one of features 2 to 7, wherein the magnets form a closed magnetic circuit.
9. A machine according to any one of the preceding features wherein the or each rotor includes a permanent magnet.
10. A machine according to any one of the preceding features wherein the or each rotor includes a rotor field winding.
11. A machine according to feature 9, wherein each of the rotor field windings and the electromagnets of the magnetic poles are connected together in series or parallel.
12. A machine according to any one of features 2 to 11, wherein the magnets are connected together in more than one magnetic circuit.
13. A machine according to feature 12, wherein a first magnetic circuit is disposed inside a second magnetic circuit, each of the first and second circuits lying in substantially the same plane.
14. A machine according to feature 12 wherein a first magnetic circuit and a second magnetic circuit lie in substantially perpendicular planes.
15. A machine according to any one of the preceding features wherein the rotors are driveable independently for driving respective loads.
16. A machine according to any one of the preceding features wherein the rotors are driveable independently for driving a common load.
17. A machine according to any one of the preceding features wherein the rotors are drivable together to drive respective loads independently.
18. A machine according to any one of the preceding features wherein the rotors are drivable together to drive a common load.
19. A machine according to any one of the preceding features wherein the rotors are electrically driven.
20. A machine according to features 18 or 19, wherein the rotors are mounted on a common shaft, the rotors include a single commutator or conductive ring, and the rotor field windings are 180° out of phase with each other.
21. A machine according to features 15, 16 or 19, wherein the rotors rotate about parallel, offset axes.
22. A machine according to features 15, 16 or 19, wherein the rotors rotate about axes which are perpendicular to each other.
23. A machine according to any one of features 2 to 22, wherein the magnetic circuit includes one of the magnets disposed inside another of the magnets.
24. A machine according to any one of features 2 to 23, wherein the magnets form a ring magnetic circuit, and the rotors are disposed around the ring.
25. A machine according to feature 24 wherein each rotor carries a pinion gear and drives an internal ring gear.
26. A machine according to feature 24, wherein each rotor carries a pinion gear and drives an external ring gear.
27. A machine according to feature 25 or feature 26, modified in that the gears are replaced by friction wheels.
28. A machine according to any one of features 2 to 24, wherein the rotors are disposed in-line with their rotors being in parallel.
29. A machine according to feature 28, wherein a respective wheel is mounted on each rotor of the electromagnetic machine.
30. A machine according to any one of the preceding features wherein the means for establishing a magnetic field includes a magnet disposed externally of the machine.
31. A machine according to any one of the preceding features wherein the rotors are disposed perpendicularly to each other.
32. A machine according to any one of the preceding feature wherein the magnets are made from a good conductive material.
33. A machine according to any one of the preceding features wherein the or each magnet has a low eddy current loss characteristic.

## Claims

1. An electromagnetic machine comprising:
at least two rotors;
means for establishing a magnetic field including a plurality of magnets, each having first and second poles, the poles of each magnet being disposed to generate a magnetic field across a different rotor such that the magnets form a magnetic circuit **characterised in that** at least one of the magnets is arranged to extend beyond the axial extent of the rotors to which it applies a magnetic field.

2. A machine according to claim 1, wherein the magnetic circuit is planar, and at least one of the axes of rotation of the rotors lies in the plane of the circuit.

3. An electromagnetic machine according to claim 1 or 2, wherein the magnets are arranged such that they form more than one separate magnetic circuit.

4. A machine according to claim 3, wherein a first magnetic circuit is disposed inside a second magnetic circuit, each of the first and second circuits lying in substantially the same plane.

5. A machine according to claim 3, wherein a first magnetic circuit and a second magnetic circuit lie in substantially perpendicular planes.

6. A machine according to any one of the preceding claims, wherein the magnets are permanent magnets.

7. A machine according to any one of claims 1 to 5, wherein magnets are electromagnets.

8. A machine according to any one of the preceding claims, wherein the electromagnetic machine is an electric motor.

9. A machine according to any one of claims 1 to 7, wherein the electromagnetic machine is an electric generator.

10. A machine according to any one of claims 1 to 7, including a rotor operable as an electric generator for being driven by an external force, and a further rotor operable as an electric motor for receiving electrical energy, the different rotors being operable simultaneously or non-simultaneously.

11. A machine according to any one of the preceding claims, wherein the rotors are driveable independently for driving respective loads.

12. A machine according to any one of the preceding claims, wherein the rotors are driveable independently for driving a common load.

13. A machine according to any one of the preceding claims, wherein the rotors are driveable together to drive respective loads independently.

14. A machine according to any one of the preceding claims, wherein the rotors are driveable together to drive a common load.

15. A machine according to any one of the preceding claims, wherein the rotors are mounted on a common shaft, the rotors include a single commutator or conductive ring, and the rotor field windings are 180° out of phase with each other.

16. A machine according to any one of the preceding claims, wherein the rotors rotate about parallel, offset axes.

17. A machine according to any one of the preceding claims, wherein rotors rotate about axes which are perpendicular to each other.

18. A machine according to any one of claims 1 to 17, wherein the magnetic circuit includes one of the magnets disposed inside another of the magnets.

19. A machine according to any preceding claim, wherein each rotor carries a pinion gear and drives an internal or external ring gear.

20. A machine according to claim 19, modified in that the gears are replaced by friction wheels.

21. A machine according to any one of claims 1 to 20, wherein the rotors are disposed in-line with their rotors being in parallel.

22. A machine according to any one of the preceding claims, wherein the rotors are disposed perpendicularly to each other.

23. An electromagnetic machine comprising:
at least two rotors;
means for establishing a magnetic field including a plurality of magnets composed of permanent magnets or exciting coils, each having first and second poles of opposite polarity at different ends, each pole being disposed to generate a magnetic field through a rotor to which it is associated and being magnetically coupled with a pole of another magnet of opposite polarity to form a magnetic circuit, **characterised in that** the magnetic circuit between first and second poles, and **in that** at least one of the magnets is arranged to extend beyond the axial extent of one of the rotors to which it applies a magnetic field.

24. An electromagnetic machine comprising:
at least two rotors which have parallel, offset axes;
means for establishing a magnetic field including a plurality of magnets, each having first and second poles, the poles of each magnet being disposed to generate a magnetic field across a different one of the rotors to form a magnetic circuit wherein at least one of the magnets is arranged to extend beyond the axial extent of the rotors to which it applies a magnetic field.
